# EUROPÄISCHE PATENTANMELDUNG

(11) **EP 0 747 194 A1**
(43) Veröffentlichungstag der Anmeldung: **11.12.1996**
(21) Anmeldenummer: 96201549.1
(22) Anmeldetag: 04.06.1996
(51) Int. Cl.: B29C 45/12

(54) **Zweietagen-Spritzgiessmaschine**

(30) Priorität: 08.06.1995 DE 19520931
(71) Anmelder: Polygram Manufacturing & Distribution Centres GmbH, 30835 Langenhagen (DE); Polygram International Holding B.V., 3743 DN Baarn (NL)
(72) Erfinder: Wilhelm, Henning, 31275 Lehrte/OT. Aligse (DE)
(74) Vertreter: Erdmann, Anton, Dipl.-Ing.

(57) **Zusammenfassung**

Die Erfindung bezieht sich auf eine Zweietagen-Spritzgießmaschine mit einer stationären Formplatte (11), einer beweglichen Formplatte (13) und einem dazwischen beweglich angeordneten Mittelpaket (14) und mit einer Spritzmaterialzufuhr für das Mittelpaket (14) zur Versorgung der zwischen dem Mittelpaket (14) und den Formplatten (11, 13) gebildeten Etagen (16, 17). Um den Aufwand bei der Herstellung von verschiedenfarbigen Spritzgießteilen bei ein und demselben Spritzvorgang zu vermeiden, wird gemäß der Erfindung vorgeschlagen, daß jeder Etage (16, 17) über jeweils einen eigenen Kanal (21, 25) eine gesonderte Spritzmaterialzufuhr zugeordnet ist. Neben der freien Farbwahl pro Etage ist der Einsatz verschiedenster Kunststoffsorten pro Etage in ein und demselben Spritzvorgang möglich.

## Beschreibung

Die Erfindung bezieht sich auf eine Zweietagen-Spritzgießmaschine mit einer stationären Formplatte, einer beweglichen Formplatte und einem dazwischen beweglich angeordneten, zweigeteilten Mittelpaket und mit einer Spritzmaterialzufuhr für das Mittelpaket zur Versorgung der zwischen dem Mittelpaket und den Formplatten gebildeten Etagen mit Spritzmaterial.

Spritzgießmaschinen der eingangs genannten Art sind bekannt. Sie dienen z.B. zur Produktion von Kunststoffteilen, z.B. von CD-Verpackungen. Bei den bekannten Spritzgießmaschinen wird der einfarbige Kunststoff dem zweigeteilten Mittelpaket über einen zentrischen Heißkanal zugeführt und von dort über eine Verteilerplatte zu den in den beiden Etagen angeordneten Kavitäten geleitet. Dies bedeutet, daß mit den in den beiden Etagen angeordneten Kavitäten immer nur aus gleichem Material bestehende Kunststoffteile ein und derselben Farbe gespritzt werden können, da für beide Etagen nur eine gemeinsame Verteilerplatte vorgesehen ist, über welche bei einem Einspritzvorgang das Spritzmaterial gleichzeitig in beide Etagen gefördert wird. Dagegen ist es wohl möglich, in den beiden Etagen zwei unterschiedliche Kavitäten vorzusehen, so daß z.B. für eine CD-Verpackung in der einen Etage die Deckelteile und in der anderen Etage die Bodenteile geformt werden.

Zur Produktion von z.B. CD-Verpackungen, die aus zwei verschiedenartig eingefärbten Teilen bestehen, wurde bisher für jede Farbe eine gesonderte Spritzgießmaschine benötigt. Eine bekannte Multibox-CD-Verpackung besteht z.B. aus zwei gleichartig geformten Deckelteilen und aus einem dazwischen angeordneten Mittelstück. Will man eine derartige Verpackung so gestalten, daß z.B. das Mittelstück schwarz und die Deckelteile hell gefärbt sind, so wurden bisher dazu zwei Maschinen benötigt. In einem Spritzvorgang wurden z.B. in einer Einetagen-Spritzgießmaschine zwei Mittelstücke und in einer Zweietagen-Spritzgießmaschine vier gleiche Deckelteile gefertigt. Nach dem Spritzvorgang wurden sodann die zwei Mittelstücke und die vier Deckelteile durch Greifvorrichtungen entnommen, zu einem Montageautomaten transportiert und dort zu der Verpackung zusammengefügt.

Der Erfindung liegt die Aufgabe zugrunde, eine Zweietagen-Spritzgießmaschine der eingangs genannten Art derart zu verbessern, daß mit ein und derselben Spritzgießmaschine in einem Arbeitsgang auch zweifarbige Kunststoffteile, d.h. Kunststoffteile in zwei verschiedenen Farben, gespritzt werden können, die gegebenenfalls aus unterschiedlichem Material gefertigt sein können.

Diese Aufgabe wird gemäß der Erfindung dadurch gelöst, daß jeder Etage über einen eigenen Kanal (Heißkanal) eine gesonderte Spritzmaterialzufuhr zugeordnet ist. Damit ist es möglich, in der einen Etage Kunststoffteile der einen Farbe aus einem ersten Material und in der anderen Etage Kunststoffteile der anderen Farbe aus einem unterschiedlichen, zweiten Material herzustellen, und zwar bei ein und demselben Spritzvorgang. Der Vorteil besteht darin, daß die verschiedenartigen Teile nunmehr in einer einzigen Spritzgießmaschine hergestellt werden können. Der bisher mit zwei Maschinen erforderliche Aufwand kann somit erheblich reduziert werden. Der Vorteil besteht somit in dem Wegfall der zweiten Spritzgießmaschine und in dem Wegfall der komplizierten Greifvorrichtung, die bisher notwendig war, um die verschieden gefärbten Teile der beiden Maschinen taktgleich zu greifen und zu einem Montageautomaten zu befördern. Die jetzt in ein und derselben Maschine gefertigten, zwei unterschiedlich eingefärbten und gegebenenfalls aus verschiedenem Material bestehenden Kunststoffteile können durch einen einzigen Greifautomaten erfaßt und sodann zu dem Montageautomaten gefördert werden. Überdies ergibt sich ein erheblich reduzierter Platzbedarf und ein erheblich reduzierter Ausschuß bei der Fertigung.

In Ausgestaltung der Erfindung ist vorgesehen, daß jedes Teilstück des zweigeteilten Mittelpaketes eine eigene, an einen Kanal (Heißkanal) angeschlossene Verteilerplatte für die Zufuhr von Spritzmaterial in je eine Etage aufweist. Auf diese Weise ergibt sich eine klare und zuverlässige Trennung der beiden verschiedenen Spritzmaterialien für jede der beiden Etagen. Eine Beeinflussung oder gegenseitige Störung der verschiedenen Spritzmaterialzuführungen ist damit ausgeschlossen.

In weiterer Ausgestaltung der Erfindung ist vorgesehen, daß die Spritzmaterialzuführ für die der stationären Form benachbarte erste Etage über einen zentrisch in der stationären Form angeordneten Hauptkanal erfolgt. Bei den bisher bekannten Zweietagen-Spritzgießmaschinen erfolgt die Zufuhr des einfarbigen Spritzmaterials ebenfalls bereits über einen zentrisch in der stationären Form angeordneten Hauptkanal, jedoch wurde bisher in der gemeinsamen Verteilerplatte das einfarbige Spritzmaterial sowohl in die erste als auch in die zweite Etage gefördert. Bei der erfindungsgemäßen Bauart wird das durch den zentrischen Hauptkanal geförderte Spritzmaterial jedoch nur in die erste Etage geleitet. Bei dieser Bauart können die bisher bekannten, ein Heißkanal-System aufweisenden Zweietagen-Spritzgießmaschinen mit der gemeinsamen Verteilerplatte verwendet werden, wobei jedoch die Kanäle für die Zufuhr des Spritzmaterial in die zweite Etage verschlossen werden. Insofern ergibt sich eine Einsparung dadurch, daß für die erste Etage im Prinzip die bisherige Bauweise mit nur kleinen Änderungen weiter verwendet werden kann.

In weiterer Ausgestaltung der Erfindung ist vorgesehen, daß die Spritzmaterialzufuhr für die zweite Etage über einen exzentrisch angeordneten Nebenkanal erfolgt. Dieser Nebenkanal wird außerhalb der stationären Formplatte und des zweigeteilten Mittelpaketes geführt und mündet in das Teilstück, welches die Verteilerplatte für die zweite Etage aufweist. Somit besitzen sowohl das erste als auch das zweite Teilstück des Mittelpaketes jeweils eine gesonderte Verteilerplatte, die jeweils unabhängig voneinander mit unterschiedlich eingefärbten und gegebenenfalls unterschiedlichen Spritzmaterialien beaufschlagt werden können.

Bei einer Spritzgießmaschine mit einer der stationären Formplatte vorgeschalteten Düsenplatte, mit einem zentrisch angeordneten Hauptaggregat, welches zwecks Versorgung der ersten Etage mit Spritzmaterial über einen Hauptkanal mit der zugehörigen Verteilerplatte verbunden ist, wird in Ausgestaltung der Erfindung vorgeschlagen, daß die Düsenplatte zur Aufnahme eines Nebenaggregates für die Zufuhr von Spritzmaterial in die zweite Etage radial vergrößert ausgebildet ist und daß das Nebenaggregat über den im Bereich der ersten Etage gebildeten Nebenkanal mit der zugehörigen Verteilerplatte des Mittelpaketes verbunden ist. Eine derartige Bauweise hat den Vorteil, daß lediglich die bereits vorhandene Düsenplatte derart gestaltet wird, daß sie zur Aufnahme des Nebenaggregates dienen kann. Die jeweilige Anordnung des Nebenaggregates, ob oben, seitlich oder schräg, ergibt sich aus dem jeweiligen Einsatzfall und ist grundsätzlich nicht festgelegt. Die Verbindung zwischen dem Nebenaggregat und der im Teilstück des Mittelpaketes angeordneten Verteilerplatte zur Versorgung der zweiten Etage erfolgt durch den Nebenkanal, der im Bereich der ersten Etage geteilt ist. Nach Beendigung der Formschließbewegung sind die beiden Teile des Nebenkanales miteinander verbunden, so daß eine zuverlässige Zufuhr des Spritzmittels gewährleistet ist.

Damit die beiden Teile des Nebenkanales beim Spritzvorgang jeweils genau miteinander verbunden werden können, sind seine beiden Teilstücke jeweils mit den Außenseiten der stationären Formplatte bzw. des Mittelpaketes fest, z.B. durch Schrauben, verbunden.

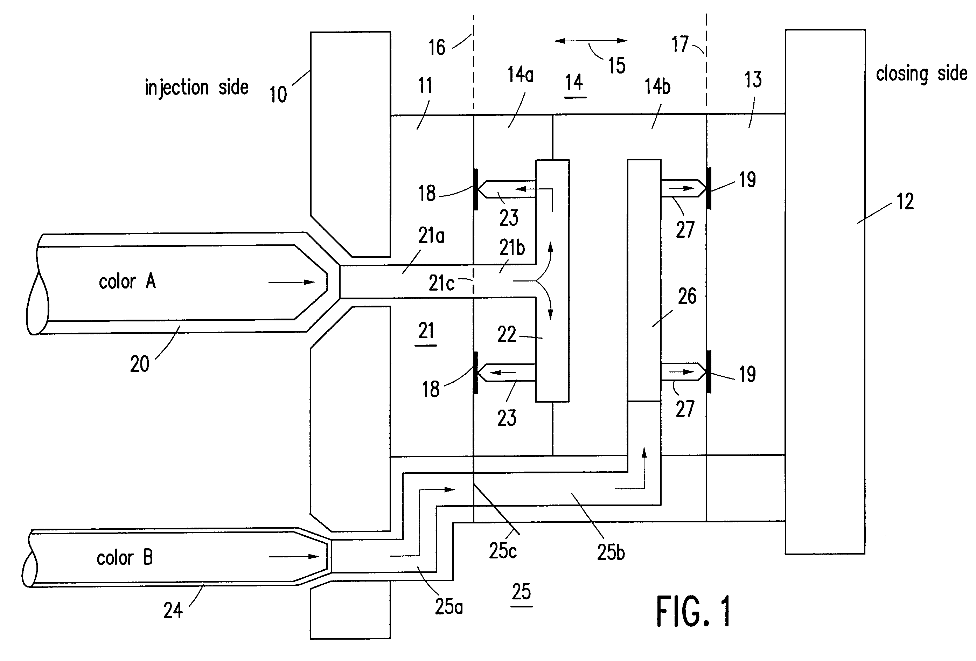

In der Zeichnung ist in Fig. 1 ein Ausführungsbeispiel des Gegenstandes gemäß der Erfindung schematisch dargestellt.

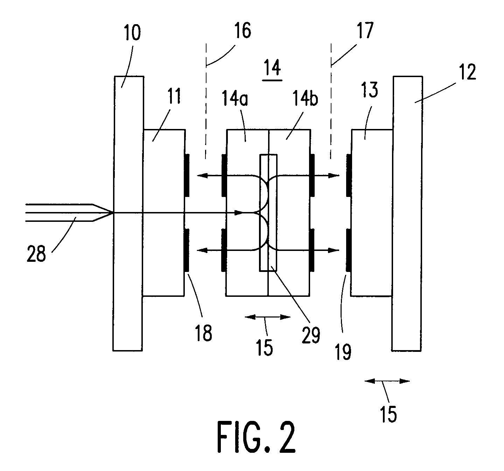

Fig. 2 zeigt eine schematische Skizze des Standes der Technik.

Die Zweietagen-Spritzgießmaschine gemäß Fig. 1 besitzt eine stationäre Düsenplatte 10 mit einer stationären Formplatte 11 und eine bewegliche Platte 12 mit einer beweglichen Formplatte 13. Dazwischen befindet sich ein bewegliches Mittelpaket 14, das aus den beiden Teilstücken 14a und 14b zusammengesetzt ist. Das Mittelpaket 14 und die Platte 12 mit der Formplatte 13 sind in Richtung 15 beweglich angeordnet. Die Spritzgießmaschine gemäß Fig. 1 ist in geschlossenem Zustand dargestellt und bildet an der linken Seite die sogenannte Spritzseite und an der rechten Seite die sogenannte Schließseite. Das Mittelpaket 14 bildet mit seinem ersten Teilstück 14a und der stationären Formplatte 11 eine erste Form-Etage 16 und mit seinem zweiten Teilstück 14b und der beweglichen Formplatte 13 eine zweite Form-Etage 17. In den Form-Etagen 16 und 17 sind Kavitäten 18 und 19 angeordnet, die beim Spritzvorgang mit Spritzmaterial gefüllt werden. Das Spritzmaterial mit der Farbe A wird von einem Hauptaggregat 20 über einen zentrisch angeordneten Hauptkanal 21 zu einer im ersten Teilstück 14a angeordneten Verteilerplatte 22 und von dort über Kanäle 23 zu den Kavitäten 18 geleitet. Unabhängig davon wird Spritzmaterial der Farbe B von einem exzentrisch angeordneten Nebenaggregat 24 über einen Nebenkanal 25 zu einer Verteilerplatte 26 in dem anderen Teilstück 14b des Mittelpaketes 14 und von dort über Kanäle 27 zu den Kavitäten 19 in der zweiten Etage 17 geleitet. Der aus den beiden Teilen 25a, b bestehende Nebenkanal ist im Bereich der ersten Etage 16 an der Stelle 25c geteilt. Gleiches gilt für den aus den beiden Teilen 21a und 21b bestehenden Hauptkanal 21, der an der Stelle 21c geteilt ist. Im Augenblick des Zusammentreffens der Formplatten 11 und 13 mit dem Mittelpaket erfolgt auf nicht dargestellte, bekannte Weise eine Verbindung der Teile 21a, b bzw. 25a, b, so daß ein zuverlässiger Materialfluß zu den Kavitäten 18, 19 gewährleistet ist. Vor dem Öffnen der Formplatten 11, 13 werden diese Kanäle wieder auf nicht dargestellte Weise geschlossen.

Im dargestellten Ausführungsbeispiel gemäß Fig. 1 werden z.B. bei jedem Spritzvorgang in der ersten Etage 16 zwei schwarz eingefärbte Mittelteile und in der zweiten Etage 17 vier hell eingefärbte Deckelteile einer Multibox gefertigt. Nach dem Spritzvorgang werden sodann die Teile durch eine nicht dargestellte Greifvorrichtung zu einer Montagevorrichtung geführt und hier zu zwei kompletten Multiboxen zusammengesetzt. Auch die Kunststoffsorte, z.B. PE (Polyäthylen), PP (Polypropylen) oder PS (Polystyrol), ist für jede Etage durch die strikte Trennung der Materialflüsse frei wählbar.

Fig. 2 zeigt zur Erläuterung eine bisher bekannte Zweietagen-Spritzgießmaschine, bei der gleiche Teile mit gleichen Ziffern bezeichnet sind. Im Unterschied zu der Bauart gemäß der Erfindung ist hier nur eine einzige zentrische Zuführung 28 für Spritzmaterial vorgesehen, welches im Mittelpaket 16 über eine beiden Etagen 16, 17 gemeinsame Verteilerplatte 29 zu den Kavitäten 18 und 19 geleitet wird. Wie leicht zu erkennen ist, kann bei dieser Bauart nur Spritzmaterial von ein und derselben Farbe verwendet werden, so daß auch die gespritzten Teile nur ein und dieselbe Einfärbung haben können. Die Kunststoffsorte ist für beide Etagen gleich.

## Patentansprüche

1. Zweietagen-Spritzgießmaschine mit einer stationären Formplatte (11), einer beweglichen Formplatte (13) und einem dazwischen beweglich angeordneten, zweigeteilten Mittelpaket (14) und mit einer Spritzmaterialzufuhr für das Mittelpaket (14) zur Versorgung der zwischen dem Mittelpaket (14) und den Formplatte (11, 13) gebildeten Etagen (16, 17) mit Spritzmaterial, dadurch gekennzeichnet, daß jeder Etage (16, 17) über jeweils einen eigenen Kanal (21, 25) (Heißkanal) eine gesonderte Spritzmaterialzuführ zugeordnet ist.

2. Spritzgießmaschine nach Anspruch 1, dadurch gekennzeichnet, daß jedes Teilstück (14a, b) des zweigeteilten Mittelpaketes (14) eine eigene, an einen eigenen Kanal (21, 25) (Heißkanal) angeschlossene Verteilerplatte (22, 26) für die Zufuhr von Spritzmaterial in je eine Etage (16, 17) aufweist.

3. Spritzgießmaschine nach Anspruch 1 oder 2, dadurch gekennzeichnet, daß die Spritzmaterialzufuhr für die der stationären Formplatte (11) benachbarte erste Etage (16) über einen zentrisch in der stationären Formplatte (11) angeordneten Hauptkanal (21) erfolgt.

4. Spritzgießmaschine nach Anspruch 1 oder 2, dadurch gekennzeichnet, daß die Spritzmaterialzufuhr für die der beweglichen Formplatte (13) benachbarte zweite Etage (17) über einen exzentrisch angeordneten Nebenkanal (25) erfolgt.

5. Spritzgießmaschine mit einer der stationären Formplatte (11) vorgeschalteten Düsenplatte (10) und mit einem zentrisch angeordeten Hauptaggregat (20), welches zwecks Versorgung der ersten Etage (16) mit Spritzmaterial über den Hauptkanal (21) mit der zugehörigen Verteilerplatte (22) des Mittelpaketes (14) verbunden ist, dadurch gekennzeichnet, daß die Düsenplatte (10) zur Aufnahme des Nebenaggregates (24) für die Zufuhr von Spritzmaterial in die zweite Etage (17) radial vergrößert ausgebildet ist und daß das Nebenaggregat (24) über den im Bereich der ersten Etage (16) geteilten Nebenkanal (25) mit der Verteilerplatte (26) des Mittelpaketes verbunden ist.

6. Spritzgießmaschine nach Anspruch 5, dadurch gekennzeichnet, daß die Teilstücke (25a, b) des Nebenkanals (25) jeweils mit den Außenseiten der stationären Formplatte (21) bzw. des Mittelpaketes (14) lösbar (z.B. abschraubbar) verbunden sind.
